(19) **Europäisches Patentamt / European Patent Office / Office européen des brevets**

(11) **EP 4 224 129 A1**

(12) **EUROPEAN PATENT APPLICATION**
published in accordance with Art. 153(4) EPC

(43) Date of publication:
**09.08.2023 Bulletin 2023/32**

(21) Application number: **21875076.8**

(22) Date of filing: **03.09.2021**

(51) International Patent Classification (IPC):
*G01L 1/24* (2006.01)    *G01J 1/58* (2006.01)
*G01L 1/00* (2006.01)    *G01L 5/00* (2006.01)

(52) Cooperative Patent Classification (CPC):
**G01J 1/58; G01L 1/00; G01L 1/24; G01L 5/00**

(86) International application number:
**PCT/JP2021/032477**

(87) International publication number:
**WO 2022/070774 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.10.2020 JP 2020167441**

(71) Applicant: **FUJIFILM Corporation**
**Tokyo 106-8620 (JP)**

(72) Inventor: **YAMAZAKI, Yoshiro**
**Tokyo 106-8620 (JP)**

(74) Representative: **Meissner Bolte Partnerschaft mbB**
**Widenmayerstrasse 47**
**80538 München (DE)**

(54) **IMAGE ANALYSIS METHOD, IMAGE ANALYSIS DEVICE, PROGRAM, AND RECORDING MEDIUM**

(57)    Provided are an image analysis method, an image analysis device, a program, and a recording medium capable of more easily eliminating an influence of an illuminance distribution in a case where an object is imaged.

The embodiment of the present invention acquires first image data obtained by imaging an object, which develops color according to an amount of external energy in a case where the external energy is applied, with a first sensitivity, acquires second image data obtained by imaging the object with a second sensitivity different from the first sensitivity, calculates a ratio of an image signal value indicated by the first image data with respect to an image signal value indicated by the second image data, and estimates the amount of the external energy applied to the object, based on a correspondence relationship between the amount of the external energy and the ratio, and a calculation result of the ratio in a calculation step.

FIG. 23

EP 4 224 129 A1

**Description**

**BACKGROUND OF THE INVENTION**

1. Field of the Invention

The present invention relates to an image analysis method, an image analysis device, a program, and a recording medium, and in particular, to an image analysis method, an image analysis device, a program, and a recording medium for estimating an amount of external energy applied to an object based on image data of an object that develops color when external energy is applied.

2. Description of the Related Art

It is already known to measure (estimate) the amount of external energy applied to an object by using an object such as a pressure-sensitive sheet that develops color when external energy is applied. Specifically, a color-developed object is imaged with a scanner, a camera, or the like, color of the object (strictly speaking, color of a color-developed portion in the object) is specified from the image data, and the amount of the external energy is estimated from the specified color.

According to the technique described in JP2008-232665A, a pressure measurement film (corresponding to an object) is read with a scanner to obtain a brightness value, and the brightness value is converted into a pressure value by using a conversion table that indicates a relationship between a density value and the pressure value. Further, in the technique described in JP2008-232665A, in a case where the pressure measurement film is read by a scanner other than a reference machine, a calibration coefficient is set by reading a calibration sheet used for the calibration. Thereafter, the calibration is performed on the brightness value, which is obtained by reading the pressure measurement film, by using the calibration coefficient, and the calibrated brightness value is converted into the pressure value.

By the way, in the case of imaging an object, the color of a captured image, specifically, the brightness of each part of the image may change by the imaging environment, for example, the spectral distribution of illumination, illuminance distribution, or the like. Further, in a case where an object is imaged by using a general camera or an information processing terminal having an imaging function for the reason that the object is simply imaged, it is likely to be influenced by the illumination described above. In this case, in the object, in a case where a plurality of portions that are color-developed with the same color are imaged, the color of each portion in the captured image may be different due to the influence of the illumination, and specifically, an image signal value, which is indicated by the image data, may change.

JP1993-110767A (JP-H-5-110767A) points out that the amount of light of a light source in the case of reading a document with a scanner changes according to the wavelength and describes changing the transmittance of each color component at a predetermined ratio in the case of separating light reflected from the document into a plurality of color components, as a solution to the problem. By applying the technique described in JP1993-110767A (JP-H-5-110767A) to a reading method described in JP2008-232665A, the non-uniformity of the spectral distribution of the light source can be offset. However, even in such a case, the influence of the non-uniformity of the illuminance on a surface of the object can occur.

**SUMMARY OF THE INVENTION**

As a method of eliminating the influence of the non-uniformity of the illuminance, it is common to perform shading correction or the like on a captured image (specifically, an image signal value indicated by the image data) of an object. However, in a case where the shading correction is performed, a series of processes related to correction, such as preparing a reference object such as a blank sheet of paper separately from the object and setting a correction value from a captured image obtained by imaging the reference object, requires time and effort.

The present invention has been made in view of the above circumstances, and the object of the present invention is to solve the following problem.

The purpose of the present invention is to provide an image analysis method, an image analysis device, a program, and a recording medium that are capable of solving the above-described problems in the related art and more easily eliminating the influence of the illuminance distribution in case of imaging an object.

In order to achieve the above purposes, an image analysis method according to an aspect of the present invention comprises: a first acquisition step of acquiring first image data obtained by imaging an object, which develops color according to an amount of external energy in a case where the external energy is applied, with a first sensitivity; a second acquisition step of acquiring second image data obtained by imaging the object with a second sensitivity different from the first sensitivity; a calculation step of calculating a ratio of an image signal value indicated by the first image data with respect to an image signal value indicated by the second image data; and an estimation step of estimating the amount of the external energy applied to the object, based on a correspondence relationship between the amount of the external energy and the ratio, and a calculation result of the ratio in the calculation step.

According to the image analysis method of the present invention, it is possible to more easily eliminate the influence of the illuminance distribution in a case where the object is imaged as compared with the case of performing the shading correction in the related art.

Further, the image analysis method according to the aspect of the present invention may further comprise: a correction step of performing correction, with respect to the ratio, for canceling an influence of a spectral distribution of illumination in a case where the object is imaged. In this case, in the correction step, first reference data, which is obtained by imaging a reference object with the first sensitivity, may be acquired, second reference data, which is obtained by imaging the reference object with the second sensitivity, may be acquired, a correction value may be calculated based on an image signal value indicated by the first reference data and an image signal value indicated by the second reference data, and the calculation result of the ratio in the calculation step may be corrected by using the correction value, and in the estimation step, the amount of the external energy applied to the object may be estimated based on the correspondence relationship and the corrected ratio.

According to the above configuration, it is possible to more easily eliminate (cancel) the influence of the spectral distribution of the illumination in a case where the object is imaged.

Further, in the above configuration, it is preferable that the reference object is a member of which a spectral reflectance of surface color is known. Further, it is more preferable that the reference object is a member of which surface color has single and uniform color. By using the above reference object, it is possible to appropriately perform correction for canceling the influence of the spectral distribution of the illumination in a case where the object is imaged.

Further, in the above configuration, the first image data and the first reference data may be acquired by imaging the object and the reference object at the same time with the first sensitivity, and the second image data and the second reference data may be acquired by imaging the object and the reference object at the same time with the second sensitivity. In this case, each image data and each reference data can be efficiently acquired.

Further, in the image analysis method of the aspect of the present invention, at least one of a wavelength range, which defines the first sensitivity, or a wavelength range, which defines the second sensitivity, may have a half-width of 10 nm or less. Each of the half-widths of the first sensitivity and the second sensitivity affects the correspondence relationship between the ratio and the amount of the external energy, specifically, the height of the correlation. In view of this, by setting the half-width to 10 nm or less, the amount of the external energy can be estimated accurately from the above ratio.

Further, in the image analysis method of the aspect of the present invention, in the first acquisition step, the first image data may be acquired by causing an imaging device, which has a color sensor, to image the object in a state in which a first filter, where a spectral sensitivity is set to the first sensitivity, is attached, and in the second acquisition step, the second image data may be acquired by causing the imaging device to image the object in a state in which a second filter, where a spectral sensitivity is set to the second sensitivity, is attached.

As described above, the first image data and the second image data can be appropriately acquired by imaging the object by switching two filters (bandpass filters) having different spectral sensitivities.

Further, in the above configuration, in the first acquisition step, the first image data may be acquired by imaging the object in a state in which the first filter is disposed between the color sensor and a lens in the imaging device, and in the second acquisition step, the second image data may be acquired by imaging the object in a state in which the second filter is disposed between the color sensor and the lens in the imaging device. By disposing each filter between the color sensor and the lens (that is, in the middle position of the optical path in the imaging device), the object can be imaged more appropriately with the spectral sensitivity of each filter.

Further, in the above configuration, a removal process for removing an influence of interference between each of the first filter and the second filter, and the color sensor may be performed for respective image signal values indicated by the first image data and the second image data, and in the calculation step, the ratio may be calculated by using the image signal value after the removal process is performed. As a result, the amount of the external energy can be estimated more accurately based on the ratio calculated by using the image signal value on which the removal process is performed.

Further, in the image analysis method of the aspect of the present invention, each of the first sensitivity and the second sensitivity may be set such that the amount of the external energy monotonically increases or monotonically decreases with respect to the ratio. In this case, the validity of the result (estimation result) of estimating the amount of the external energy based on the above ratio is improved.

Further, in the image analysis method of the aspect of the present invention, in the calculation step, the ratio may be calculated for each of a plurality of pixels constituting a captured image of the object, and in the estimation step, the amount of the external energy applied to the object may be estimated for each of the pixels. As a result, it is possible to grasp the distribution of the amount of the external energy applied to the object on the surface of the object.

Further, in order to achieve the above-described problems, an image analysis device according to another aspect of the present invention comprises: a processor, in which the processor is configured to acquire first image data obtained by imaging an object, which develops color according to an amount of external energy in a case where the external energy is applied, with a first sensitivity, acquire second image data obtained by imaging the object with a second sensitivity different from the first sensitivity, calculate a ratio of an image signal value indicated by the first image data with respect to an image signal value indicated by the second image data, and estimate the amount of the external energy applied to the object, based on a correspondence relationship between the amount of the external energy and the ratio, and a calculation result of the ratio.

According to the image analysis device of the present invention, it is possible to more easily eliminate the influence of the illuminance distribution in a case where the object is imaged as compared with the case of performing the shading correction in the related art.

Further, in order to solve the above-described problems, a program according to still another aspect of the present invention is a program that causes a computer to execute each step in the image analysis method described above.

According to the program of the present invention, the image analysis method of the present invention can be realized by a computer. That is, by executing the above program, it is possible to more easily eliminate the influence of the illuminance distribution in a case where the object is imaged as compared with the case of performing the shading correction in the related art.

Further, a computer-readable recording medium on which a program for causing a computer to execute each step included in any of the image analysis methods described above is recorded, can also be realized.

According to the present invention, it is possible to more easily eliminate the influence of the illuminance distribution in a case where an object is imaged. Further, according to the present invention, it is possible to more easily eliminate the influence of the spectral distribution of the illumination in a case where an object is imaged. As a result, it is possible to efficiently perform a process of estimating the amount of external energy applied to the object, based on the captured image of the object.

## BRIEF DESCRIPTION OF THE DRAWINGS

Fig. 1 is a diagram showing an object.
Fig. 2 is a diagram showing a state in which the object is imaged.
Fig. 3 is a diagram showing a hardware configuration of an image analysis device.
Fig. 4 is a block diagram showing a function of the image analysis device.
Fig. 5 is a diagram showing an example of a spectral sensitivity of each color of a color sensor, a first sensitivity, and a second sensitivity.
Fig. 6 is a diagram showing another example of a spectral sensitivity of each color of a color sensor, a first sensitivity, and a second sensitivity.
Fig. 7 is a diagram showing a relational expression used in a removal process.
Fig. 8 is a diagram showing a plurality of spectral reflectance obtained by applying different amounts of external energy to an object according to an example.
Fig. 9 is a diagram showing a plurality of spectral reflectance obtained by applying different amounts of external energy to an object according to another example.
Fig. 10 is a diagram showing spectral distributions of two illuminations.
Fig. 11A is a diagram showing the first sensitivity and the second sensitivity adjusted under illumination 1 in a case where a half-width is set to 10 nm.
Fig. 11B is a diagram showing the first sensitivity and the second sensitivity adjusted under illumination 2 in a case where the half-width is set to 10 nm.
Fig. 12A is a diagram showing the first sensitivity and the second sensitivity adjusted under the illumination 1 in a case where the half-width is set to 20 nm.
Fig. 12B is a diagram showing the first sensitivity and the second sensitivity adjusted under the illumination 2 in a case where the half-width is set to 20 nm.
Fig. 13A is a diagram showing the first sensitivity and the second sensitivity adjusted under the illumination 1 in a case where the half-width is set to 30 nm.
Fig. 13B is a diagram showing the first sensitivity and the second sensitivity adjusted under illumination 2 in a case where the half-width is set to 30 nm.
Fig. 14A is a diagram showing the first sensitivity and the second sensitivity adjusted under the illumination 1 in a case where the half-width is set to 40 nm.
Fig. 14B is a diagram showing the first sensitivity and the second sensitivity adjusted under illumination 2 in a case where the half-width is set to 40 nm.

Fig. 15A is a diagram showing the first sensitivity and the second sensitivity adjusted under the illumination 1 in a case where the half-width is set to 50 nm.

Fig. 15B is a diagram showing the first sensitivity and the second sensitivity adjusted under illumination 2 in a case where the half-width is set to 50 nm.

Fig. 16A is a diagram showing a correspondence relationship between a ratio and a pressure value derived from data in Fig. 8 in a case where the half-width is set to 10 nm.

Fig. 16B is a diagram showing a correspondence relationship between a ratio and a pressure value derived from data in Fig. 9 in a case where the half-width is set to 10 nm.

Fig. 17A is a diagram showing a correspondence relationship between a ratio and a pressure value derived from data in Fig. 8 in a case where the half-width is set to 20 nm.

Fig. 17B is a diagram showing a correspondence relationship between a ratio and a pressure value derived from data in Fig. 9 in a case where the half-width is set to 20 nm.

Fig. 18A is a diagram showing a correspondence relationship between a ratio and a pressure value derived from data in Fig. 8 in a case where the half-width is set to 30 nm.

Fig. 18B is a diagram showing a correspondence relationship between a ratio and a pressure value derived from data in Fig. 9 in a case where the half-width is set to 30 nm.

Fig. 19A is a diagram showing a correspondence relationship between a ratio and a pressure value derived from data in Fig. 8 in a case where the half-width is set to 40 nm.

Fig. 19B is a diagram showing a correspondence relationship between a ratio and a pressure value derived from data in Fig. 9 in a case where the half-width is set to 40 nm.

Fig. 20A is a diagram showing a correspondence relationship between a ratio and a pressure value derived from data in Fig. 8 in a case where the half-width is set to 50 nm.

Fig. 20B is a diagram showing a correspondence relationship between a ratio and a pressure value derived from data in Fig. 9 in a case where the half-width is set to 50 nm.

Fig. 21A is a diagram showing sensitivities in a case where the half-width is 10 nm and a center wavelength is changed with respect to the first sensitivity and the second sensitivity adjusted under the illumination 1.

Fig. 21B is a diagram showing sensitivities in a case where the half-width is 10 nm and a center wavelength is changed with respect to the first sensitivity and the second sensitivity adjusted under the illumination 2.

Fig. 22A is a diagram showing a correspondence relationship between a ratio and a pressure value specified under the first sensitivity and the second sensitivity shown in Figs. 21A and 21B and derived from the data in Fig. 8.

Fig. 22B is a diagram showing a correspondence relationship between a ratio and a pressure value specified under the first sensitivity and the second sensitivity shown in Figs. 21A and 21B and derived from the data in Fig. 9.

Fig. 23 is a diagram showing a flow of an image analysis flow according to one embodiment of the present invention.

## DESCRIPTION OF THE PREFERRED EMBODIMENTS

A specific embodiment of the present invention (hereinafter, the present embodiment) will be described with reference to the accompanying drawings. However, the embodiment described below is merely an example for facilitating the understanding of the embodiment of the present invention, and does not limit the embodiment of the present invention. That is, the present invention can be modified or improved from the embodiment described below without departing from the spirit of the embodiment of the present invention. Further, the embodiment of the present invention includes an equivalent thereof.

Further, in the present specification, a numerical range represented by using "~" means a range including numerical values before and after "~" as the lower limit value and the upper limit value.

Further, in the present specification, the term "color" represents "hue", "chroma saturation", and "brightness", and is a concept including shading (density) and hue.

[Regarding Object According to Present Embodiment]

In describing the present embodiment, first, an object and use of the object will be described. The object (hereinafter, an object S) according to the present embodiment is used for measuring an amount of external energy applied in a measurement environment, is disposed in the measurement environment, and develops color according to the amount of external energy by the external energy being applied under the environment.

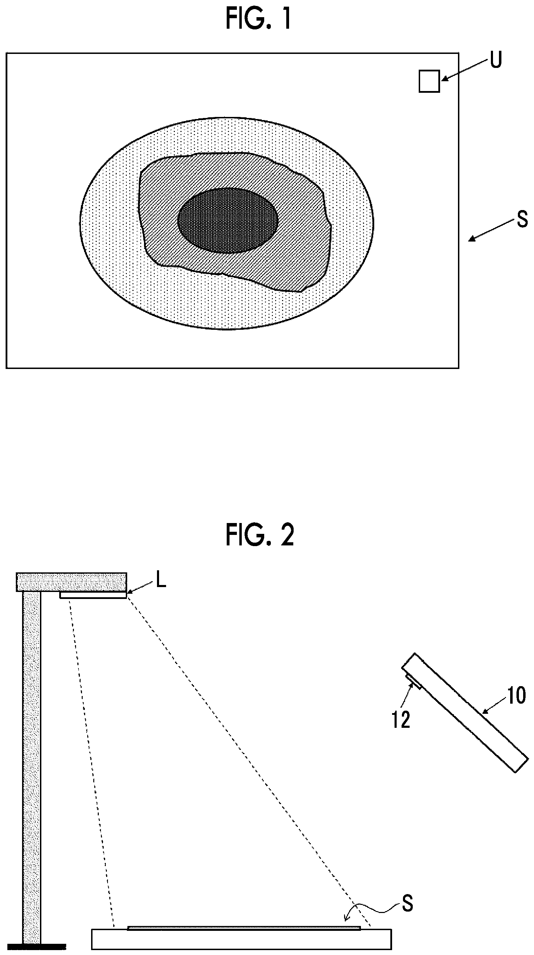

In the present embodiment, a sheet body shown in Fig. 1 is used as the object S. The sheet body as the object S is preferably made of a sufficiently thin material so that it can be disposed well in the measurement environment and may be made of paper, film, sheet, or the like. Although the object S shown in Fig. 1 has a rectangular shape in a plan view, the outer shape of the object S is not particularly limited and may be any shape.

A color former and a color developer, which are microencapsulated in a support, (for example, a color former and a color developer described in JP2020-073907A) are coated on the object S, and in a case where external energy is applied to the object S, the microcapsules are destroyed and the color former is adsorbed to the color developer. As a result, as shown in Fig. 1, the object S develops color. Further, the color (strictly speaking, the density, hereinafter referred to as the color optical density) of the color-developed object S is changed by changing the number of microcapsules to be destroyed according to the amount of the external energy applied.

The "external energy" is a force, heat, magnetism, energy waves such as ultraviolet rays and infrared rays, or the like applied to the object S in the measurement environment in which the object S is placed, and strictly speaking, is energy that causes the object S to develop color (that is, destruction of the microcapsules described above) in a case where these are applied.

Further, the "amount of external energy" is a momentary magnitude of the external energy (specifically, a force, heat, magnetism, energy waves, or the like acting on the object S) applied to the object S. However, the embodiment of the present invention is not limited to this, and in a case where the external energy is continuously applied to the object S, the amount of the external energy may be a cumulative applied amount (that is, a cumulative value of amounts of a force, heat, magnetism, and energy waves acting on the object S) during a predetermined time.

In the present embodiment, the amount of external energy applied under the measurement environment is measured based on the color of the color-developed object S, specifically, the color optical density. Specifically, the object S is imaged by an imaging device, and the amount of external energy is estimated from an image signal value indicating the color (specifically, the color optical density) of a captured image.

Further, in a case where the amount of the applied external energy is not uniform in each part of the object S, each part of the object S develops color with a density corresponding to the amount of external energy, so that a distribution of color optical density occurs on a surface of the object S. Here, the color of the respective parts of the object S have the same hue, and the color optical density changes according to the amount of external energy. By using the phenomenon, it is possible to specify a two-dimensional distribution of the amount of external energy applied to the object S from the distribution of the color optical density on the surface of the object S.

The use of the object S, in other words, the type of the external energy measured (estimated) using the object S is not particularly limited. For example, the object S may be a pressure-sensitive sheet that develops color by applying pressure, a heat-sensitive sheet that develops color by applying heat, a photosensitive sheet that develops color by being irradiated with light, or the like.

In the following, a case where the object S is a pressure-sensitive sheet and the magnitude or the cumulative amount of pressure applied to the object S is estimated will be described.

[Regarding Image Processing Device of Present Embodiment]

An image analysis device (hereinafter, an image analysis device 10) of the present embodiment will be described with reference to Figs. 2 to 4.

As shown in Fig. 2, the image analysis device 10 images the object S (specifically, the color-developed object S), which is in a state of being irradiated with light from the illumination L, analyzes the captured image, and estimates a value of pressure (pressure value) applied to the object S. The pressure value corresponds to the amount of external energy, and is a momentary magnitude of pressure or a cumulative amount of a magnitude of pressure in a case where the pressure is continuously applied in a predetermined time.

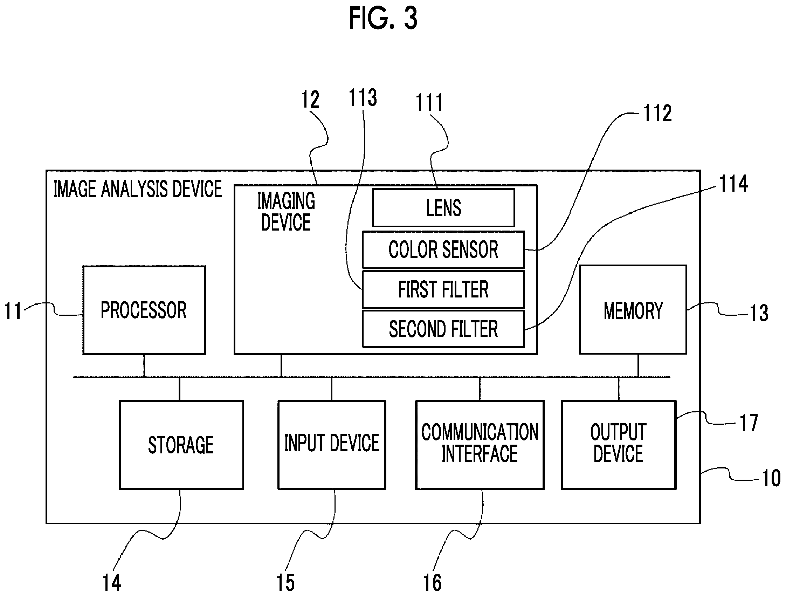

As shown in Fig. 3, the image analysis device 10 is a computer that includes a processor 11. In the present embodiment, the image analysis device 10 is configured with an information processing device including the imaging device 12, specifically, a smartphone, a tablet terminal, a digital camera, a digital video camera, a scanner, or the like. However, the embodiment of the present invention is not limited to this, and the imaging device 12 may be provided as a separate device. That is, although the computer that includes the processor 11 and the imaging device 12 are separated from each other, the computer and the imaging device 12 may cooperate with each other while being communicably connected to form one image analysis device 10.

The processor 11 includes a central processing unit (CPU), which is a general-purpose processor, a programmable logic device (PLD), which is a processor whose circuit configuration is able to be changed after manufacturing such as a field programmable gate array (FPGA), a dedicated electric circuit, which is a processor having a circuit configuration specially designed to execute specific processing such as an application specific integrated circuit (ASIC), and the like.

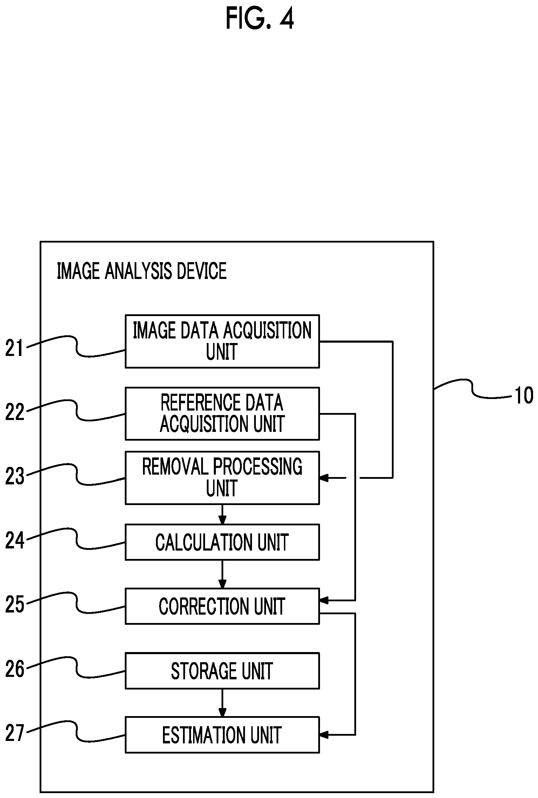

The processor 11 performs a series of processes for image analysis by executing a program for image analysis. In other words, by the cooperation between the processor 11 and the program for image analysis, a plurality of processing units shown in Fig. 4, specifically, an image data acquisition unit 21, a reference data acquisition unit 22, a removal processing unit 23, a calculation unit 24, a correction unit 25, a storage unit 26, and an estimation unit 27 are implemented. These processing units will be described in detail later.

The plurality of processing units shown in Fig. 4 may be configured with one of the plurality of types of processors described above or may be configured with a combination of two or more processors of the same type or different types, for example, a combination of a plurality of FPGAs, or may be configured with a combination of FPGAs and CPU. Further, the plurality of processing units shown in Fig. 4 may be configured with one of the plurality of types of processors described above or may be configured with one processor by collecting two or more processing units.

Further, for example, as represented by a computer such as a server and a client, a configuration can be considered in which one or more CPUs and software are combined to configure one processor, and this processor functions as the plurality of processing units shown in Fig. 4. Further, as represented by a system on chip (SoC) or the like, a configuration can be considered in which a processor, which implements the functions of the entire system including a plurality of processing units with one integrated circuit (IC) chip.

Further, the hardware configuration of the various processors described above may be an electric circuit (circuitry) in which circuit elements such as semiconductor elements are combined.

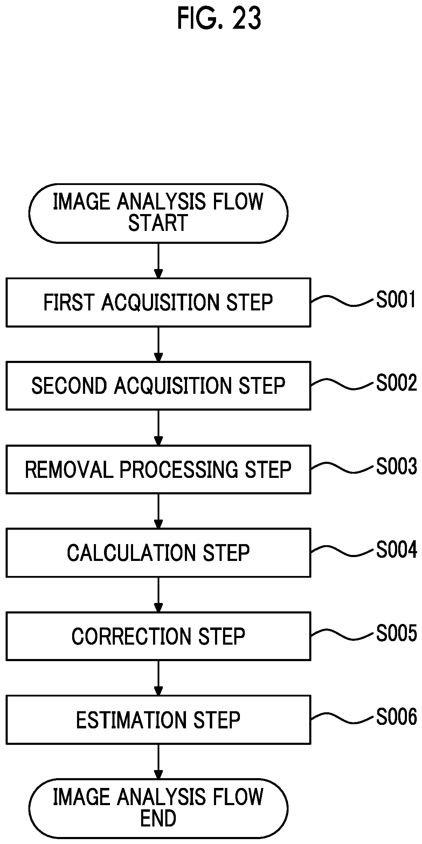

The program for image analysis, which is executed by the processor 11, corresponds to the program of the embodiment of the present invention and is a program that causes the processor 11 to execute each step in an image analysis flow described later (specifically, steps S001 to S006 shown in Fig. 23). Further, the program for image analysis is recorded on a recording medium. Here, the recording medium may be a memory 13 and a storage 14 provided in the image analysis device 10 or may be a medium such as a compact disc read only memory (CD-ROM) that can be read by a computer. Further, a storage device, which is provided in an external apparatus (for example, a server computer or the like) capable of communicating with the image analysis device 10 may be used as a recording medium, and a program for image analysis may be recorded in the storage device of the external apparatus.

The imaging device 12 is a camera, or a red green blue (RGB) camera that captures a color image in the present embodiment. As shown in Fig. 3, the imaging device 12 includes a lens 111, a color sensor 112, and two filters (specifically, a first filter 113 and a second filter 114).

The lens 111 is an imaging lens, and for example, one or more lenses 111 are accommodated in a housing (not shown) provided in the imaging device 12.

The color sensor 112 is an image sensor having three colors of RGB, passes through a lens during imaging, receives light, and outputs video signals. The output video signals are digitized by a signal processing circuit (not shown) provided in the imaging device 12 and compressed in a predetermined format. As a result, data of the captured image (hereinafter, referred to as image data) is generated.

The image data indicates an image signal value of each RGB color for each pixel. The image signal value is a gradation value of each pixel in the captured image defined within a predetermined numerical range (for example, 0 to 255 in the case of 8-bit data). The image signal value indicated by the image data is not limited to the gradation value of each RGB color and may be a gradation value of a monochrome image (specifically, a gray scale image).

The first filter 113 and the second filter 114 are bandpass filters having different spectral sensitivities from each other and are mounted on the imaging device 12 in a switchable state. In the present embodiment, the first filter 113 and the second filter 114 consist of an interference type filter and are disposed in an optical path to the color sensor 112 (the image sensor). The color sensor 112 receives light that has passed through the lens 111 and the above-mentioned interference type filter and outputs video signals. In other words, the imaging device 12 images the object S with the spectral sensitivity of the filter selected from the first filter 113 and the second filter 114.

Hereinafter, the spectral sensitivity of the first filter 113 will be referred to as "first sensitivity", and the spectral sensitivity of the second filter 114 will be referred to as "second sensitivity". That is, the first filter 113 is a filter in which the spectral sensitivity is set as the first sensitivity, and the second filter 114 is a filter in which the spectral sensitivity is set as the second sensitivity.

The first sensitivity and the second sensitivity (specifically, a wavelength range defining each spectral sensitivity) each have a half-width, and the half-width of each spectral sensitivity is not particularly limited. However, as will be described later, in order to accurately estimate the pressure value from the image signal value in a case where the object S is imaged, a half-width of at least one of the first sensitivity or the second sensitivity is preferably 10 nm or less, more preferably, both the first sensitivity and the second sensitivity have a half-width of 10 nm or less.

Further, in the present specification, a half-width means a half full width.

Further, disposition positions of the first filter 113 and the second filter 114 are not particularly limited, but for the purpose of limiting an incidence angle of light into the filter, each filter may be disposed between the color sensor 112 and the lens 111 in the imaging device 12. Particularly, it is preferable that each filter is disposed at a position where light is parallel light in the optical path in the imaging device 12, for example, each of the first filter 113 and the second filter 114 may be disposed in the housing accommodating a plurality of lenses 111, specifically, between the lenses 111. Further, in a case where the lenses cannot be exchanged as in a camera built into a smartphone, an adapter type lens unit may be attached to a main body of the imaging device 12, and the first filter 113 and the second filter 114 may be disposed in the lens unit.

As shown in Fig. 3, the image analysis device 10 further includes an input device 15 and a communication interface 16 and receives a user's input operation by using the input device 15, or communicates with other devices via the communication interface 16 to acquire various types of information. The information acquired by the image analysis device 10 includes information necessary for image analysis, specifically, information necessary for pressure measurement (pressure value estimation) using the object S.

Further, the image analysis device 10 further includes an output device 17 such as a display and can output the result of the image analysis, for example, the estimation result of the pressure value, to the output device 17 to notify the user.

[Functions of Image Analysis Device of Present Embodiment]

The configuration of the image analysis device 10 will be described from the functional aspect. The image analysis device 10 includes an image data acquisition unit 21, a reference data acquisition unit 22, a removal processing unit 23, a calculation unit 24, a correction unit 25, a storage unit 26, and an estimation unit 27 (see Fig. 4).

The image data acquisition unit 21 acquires image data obtained by imaging the object S by the imaging device 12. In the present embodiment, the imaging device 12 uses the first filter 113 and the second filter 114 by switching between the first filter 113 and the second filter 114 and images the object S with each of the first sensitivity and the second sensitivity. That is, as the image data of the object S, the image data acquisition unit 21 acquires image data, which is obtained in a case where imaging is performed with the first sensitivity (hereinafter, referred to as first image data), and image data, which is obtained in a case where imaging is performed with the second sensitivity (hereinafter, referred to as second image data).

The reference data acquisition unit 22 acquires image data (hereinafter, reference data) obtained by imaging a reference object U by the imaging device 12. The reference object U is a member of which a spectral reflectance of surface color is known, and more specifically, a member of which surface color has single and uniform color. Specific examples of the reference object U include a white pattern (chart) or the like, but any object that satisfies the above conditions can be used as the reference object U.

Further, in the present embodiment, the object S and the reference object U are integrated, and specifically, as shown in Fig. 1, a white pattern, which is the reference object U, is formed at a corner portion (for example, a corner angle part) of the sheet body forming the object S. Therefore, in the present embodiment, the object S and the reference object U can be imaged at one time, and the image data of the object S and the image data of the reference object U (that is, the reference data) can be acquired at the same time. However, the embodiment of the present invention is not limited to this, and the object S and the reference object U may be provided separately.

Although the reference data indicates an image signal value, which is obtained in a case where the reference object U is imaged, and more particularly indicates an RGB image signal value, as described above, since the spectral reflectance of the surface color of the reference object U is known, the image signal value indicated by the reference data is known.

In the present embodiment, as in the case of the object S, the imaging device 12 images the reference object U with each of the first sensitivity and the second sensitivity. That is, as the reference data, the reference data acquisition unit 22 acquires reference data, which is obtained in a case where imaging is performed with the first sensitivity (hereinafter, referred to as first reference data), and reference data, which is obtained in a case where imaging is performed with the second sensitivity (hereinafter, referred to as second reference data). Both the image signal value indicated by the first reference data and the image signal value indicated by the second reference data are known.

The removal processing unit 23 performs a removal process on respective image signal values indicated by the first image data and the second image data. The removal process is a process for eliminating the influence of interference (specifically, crosstalk) between each of the first filter 113 and the second filter 114 and the color sensor 112, and is a so-called color mixture removal correction.

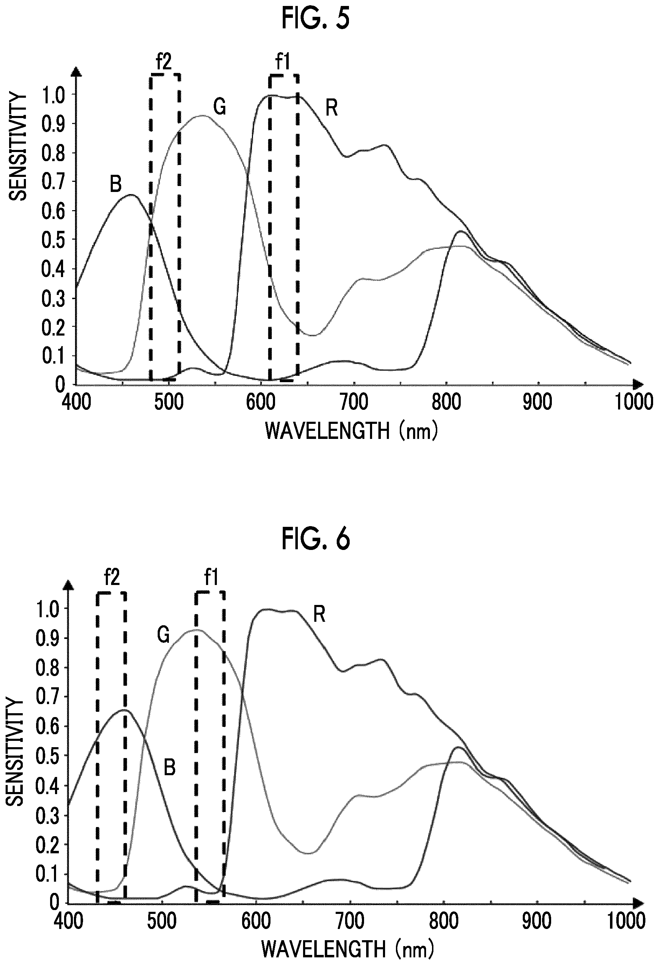

The removal process will be described with reference to Figs. 5 and 6. Figs. 5 and 6 show the spectral sensitivities of respective RGB colors of the color sensor 112 (indicated by solid lines with symbols R, G, and B in the figure), the first sensitivity (indicated by a broken line with symbol f1 in the figure), and the second sensitivity (indicated by a broken line with symbol f2 in the figure). The wavelength ranges of each of the first sensitivity and the second sensitivity are different between Figs. 5 and 6.

In order to suppress the influence of crosstalk in the case of estimating the pressure value based on the image data of the object S, in the present embodiment, spectral sensitivities corresponding to each of the first sensitivity and the second sensitivity are selected from the spectral sensitivities of the three RGB colors of the color sensor 112. The spectral sensitivity corresponding to the first sensitivity is a spectral sensitivity that has a larger overlapping range with the first sensitivity and has a smaller overlapping range with the second sensitivity among the spectral sensitivities of the three RGB colors. The spectral sensitivity corresponding to the second sensitivity is a spectral sensitivity that has a larger overlapping range with the second sensitivity and has a smaller overlapping range with the first sensitivity.

In the case shown in Fig. 5, in the color sensors 112, the spectral sensitivity of an R sensor corresponds to the first sensitivity, and the spectral sensitivity of a B sensor corresponds to the second sensitivity. Further, in the case shown in Fig. 6, the spectral sensitivity of a G sensor corresponds to the first sensitivity, and the spectral sensitivity of a B sensor corresponds to the second sensitivity.

The first image data mainly indicates an image signal value in accordance with video signals output from a sensor having a spectral sensitivity corresponding to the first sensitivity in the color sensor 112. Further, the second image data mainly indicates an image signal value in accordance with video signals output from a sensor having a spectral sensitivity corresponding to the second sensitivity in the color sensor 112. In the case shown in Fig. 5, the first image data mainly indicates the image signal value in accordance with an output signal of the R sensor, and the second image data mainly indicates the image signal value in accordance with an output signal of the B sensor.

On the other hand, the wavelength range of the first sensitivity may overlap with the spectral sensitivity corresponding to the second sensitivity. For example, in the case shown in Fig. 5, regarding the first sensitivity, the overlapping range with the spectral sensitivity of the R sensor is the largest, but it also slightly overlaps with the spectral sensitivity of the B sensor. Further, the wavelength range of the second sensitivity may also overlap with the spectral sensitivity corresponding to the first sensitivity, for example, in the case shown in Fig. 5, regarding the second sensitivity, the overlapping range with the spectral sensitivity of the B sensor is the largest, but it also slightly overlaps with the spectral sensitivity of the R sensor.

For the above-mentioned reason, crosstalk may occur for the image signal values indicated by each of the first image data and the second image data, that is, for the image signal values obtained in accordance with video signals output from sensors having spectral sensitivities corresponding to each of the first sensitivity and the second sensitivity. Therefore, in the present embodiment, the above-described removal process is performed on respective image signal values indicated by the first image data and the second image data.

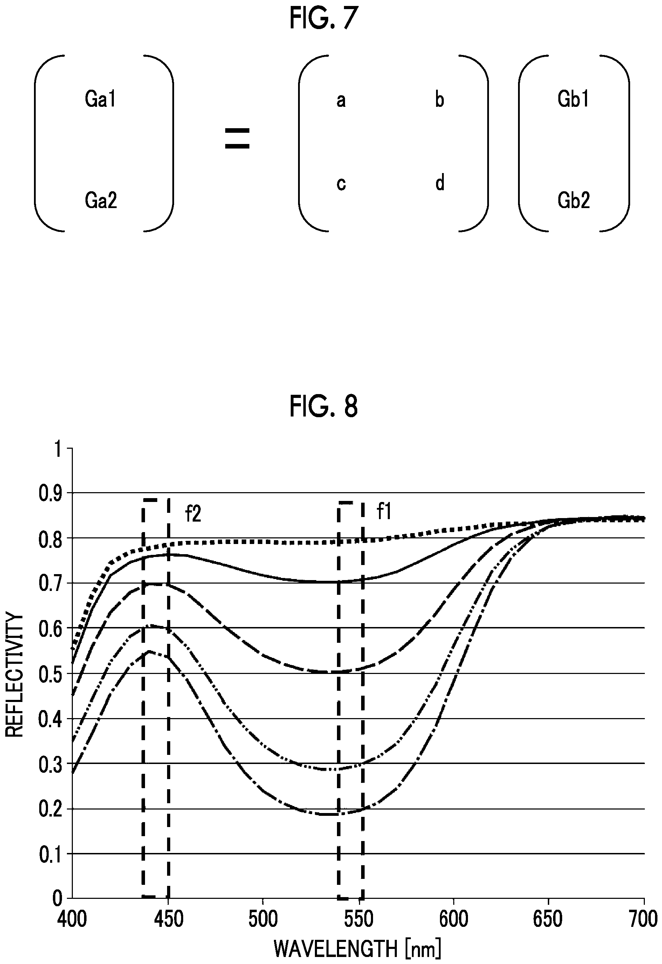

Although the specific content of the removal process, that is, the procedure for removing the influence of the crosstalk is not particularly limited, for example, the removal process may be performed by using a relational expression shown in Fig. 7.

Ga1 and Ga2 on the left side in the relational expression in Fig. 7 indicate image signal values indicated by each of the first image data and the second image data before the removal process is performed, that is, in which the influence of the crosstalk is present. Gb 1 and Gb2 on the right side indicate the image signal values after the removal process is performed, that is, in which the influence of the crosstalk is not present. Further, each of the components a, b, c, and d in the $2 \times 2$ type matrix on the right side is determined based on the image signal values obtained in a case where a colored pattern, in which the spectral reflectance is known, is imaged with the first sensitivity and the second sensitivity. In the removal process, based on the relational expression shown in Fig. 7, specifically, by multiplying the image signal values Ga1 and Ga2 before the removal process by the inverse matrix corresponding to the matrix on the right side in Fig. 7, the image signal values Gb 1 and Gb2 after the removal process can be obtained.

In the following description, the image signal values indicated by each of the first image data and the second image data are assumed to be the image signal values after the removal process has been performed, unless otherwise specified.

The calculation unit 24 calculates a ratio (hereinafter, simply referred to as a ratio) of the image signal value indicated by the first image data with respect to the image signal value indicated by the second image data. In the present embodiment, the calculation unit 24 calculates a ratio for each of a plurality of pixels configuring the captured image of the object S, in other words, calculates a ratio of the object S per unit region. The unit region is a region corresponding to one unit in a case where the surface of the object S is partitioned by a number corresponding to the number of pixels.

The correction unit 25 performs correction on a calculation result of a ratio obtained by the calculation unit 24 by using the first reference data and the second reference data. The correction, which is performed by the correction unit 25, is correction for canceling the influence of the spectral distribution of the illumination L in a case where imaging is performed on the object S, with respect to the ratio. In the present embodiment, the correction unit 25 calculates a correction value based on the image signal value indicated by the first reference data and the image signal value indicated by the second reference data and corrects the calculation result of the ratio obtained by the calculation unit 24 by using the above correction value. The specific content of the correction will be described in detail in the next section.

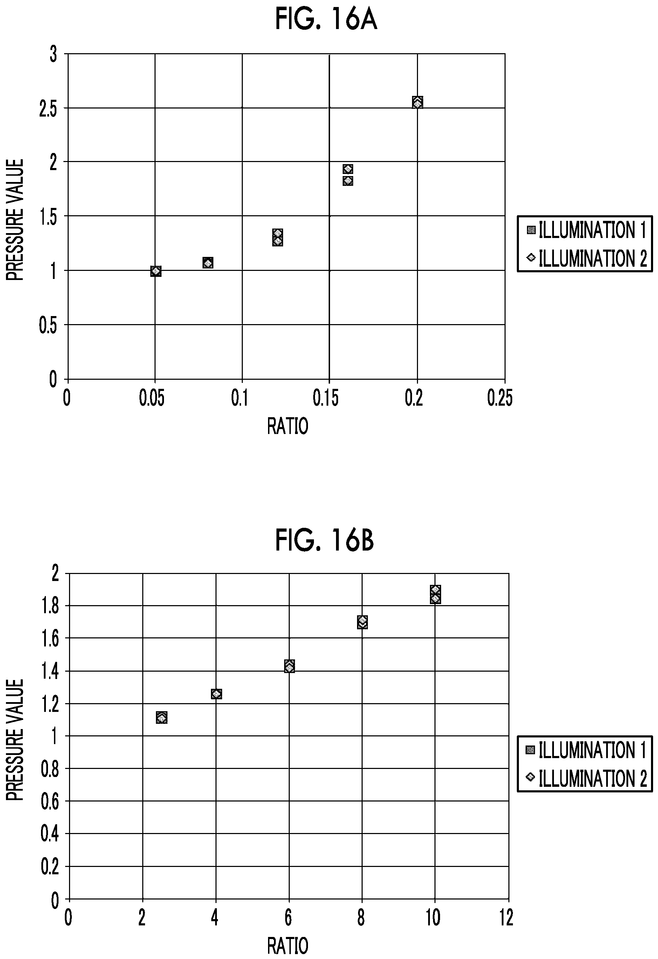

The storage unit 26 stores information necessary for pressure measurement (estimation of a pressure value) using the object S. The information stored in the storage unit 26 includes information related to a correspondence relationship between the pressure value and the ratio shown in Figs. 16A and 16B, specifically, a formula (approximate expression) or a conversion table showing a correspondence relationship.

The correspondence relationship between the pressure value and the ratio is specified in advance, for example, the correspondence relationship can be specified by acquiring image data by imaging a plurality of samples, which are made of the same sheet body as the object S, with each of the first sensitivity and the second sensitivity. Pressures of different values are applied to each of the plurality of samples, and colors are developed at different color optical densities. Further, the pressure value of the pressure applied to each sample is known.

The estimation unit 27 estimates the pressure value of the pressure applied to the object S based on the correspondence relationship between the pressure value and the ratio and the calculation result of the ratio (strictly speaking, the ratio corrected by the correction unit 25). In the present embodiment, since the calculation result of the ratio obtained by the calculation unit 24 is obtained for each pixel, the estimation unit 27 estimates the pressure value for each pixel, in other words, the pressure value for each unit region on the surface of the object S. As a result, it is possible to grasp the distribution (plane distribution) on the surface of the object S with respect to the pressure value of the pressure applied to the object S.

[Regarding Procedure of Estimating Pressure Value in Present Embodiment]

Next, the procedure of estimating the pressure value in the present embodiment will be described in detail.

In the present embodiment, the pressure value of the pressure applied to the object S is estimated for each pixel by using the ratio of each pixel. Here, an image signal value of each pixel in a case where the object S is imaged with the first sensitivity is assumed to be set as G1(x, y), and an image signal value of each pixel in a case where the object S is imaged with the second sensitivity is assumed to be set as G2(x, y). Where x and y indicate coordinate positions of the pixels, and specifically, are two-dimensional coordinates defined with a predetermined position in the captured image as an origin.

The respective image signal values G1(x, y) and G2(x, y) are represented by the following Expressions (1) and (2), respectively.

$$G1(x, y) = R(x, y, \lambda 1) \times C1(\lambda 1) \times SP(\lambda 1) \times S(x, y) \ldots \text{Expression (1)}$$

$$G2(x, y) = R(x, y, \lambda 2) \times C2(\lambda 2) \times SP(\lambda 2) \times S(x, y) \ldots \text{Expression (2)}$$

In the above Expression, R(x, y, $\lambda$) represents the spectral reflectance of the object S, SP(X) represents the spectral distribution of the illumination L, and S(x, y) represents the illuminance distribution of the illumination L, respectively. Further, C1($\lambda 1$) represents the first sensitivity, and C2($\lambda 2$) represents the second sensitivity. Further, although $\lambda 1$ indicates a wavelength range of the first sensitivity, and $\lambda 2$ indicates a wavelength range of the second sensitivity, for convenience of description, $\lambda 1$ and $\lambda 2$ will be referred to as a single wavelength in the following description.

As is clear from the above Expressions (1) and (2), the image signal value includes a term of the spectral distribution SP($\lambda$) of the illumination L and a term of the illuminance distribution S(x, y) of the illumination L. That is, each of the spectral distribution and the illuminance distribution of the illumination L affects the image signal value. Therefore, in a case where the pressure value is estimated by using the image signal value indicated by the image data as it is, there is a possibility that an accurate estimation result cannot be obtained due to the influence of the illuminance distribution. Therefore, in the present embodiment, the ratio G3(x, y) of the image signal values is calculated by the following Expression (3).

$$G3(x, y) = G1(x, y)/G2(x, y) = \{R(x, y, \lambda 1) \times C1(\lambda 1) \times SP(\lambda 1)\}/\{R(x, y, \lambda 2) \times C1(\lambda 2) \times SP(\lambda 2)\} \ldots \text{Expression (3)}$$

In the above ratio G3(x, y), as is clear from Expression (3), the influence of the illuminance distribution S(x, y) of the illumination L is canceled. On the other hand, the influence of the spectral distribution SP($\lambda$) of the illumination L still remains. Therefore, a correction is performed on the ratio G3(x, y) to cancel the influence of the spectral distribution SP($\lambda$) of the illumination L.

In the correction, first, by using the image signal value Q1(x, y) obtained in a case where the reference object U is imaged with the first sensitivity and the image signal value Q2(x, y) obtained in a case where the reference object U is imaged with the second sensitivity, a ratio Q3(x, y) of the two is calculated by using Expression (4).

$$Q3(x, y) = Q1(x, y)/Q2(x, y) = \{T(x, y, \lambda 1) \times C1(\lambda 1) \times SP(\lambda 1)\}/\{T(x, y, \lambda 2) \times C1(\lambda 2) \times SP(\lambda 2)\} \ldots \text{Expression (4)}$$

In above Expression (4), although T(x, y, $\lambda$) indicates the spectral reflectance of the reference object U, the reference object U is a member of which the spectral reflectance is known, and the surface color of the reference object U is uniform and each part of the surface has the same color (specifically, the hue, chroma saturation, and brightness are uniform). Therefore, T(x, y) is a constant value (defined value) regardless of the positions x and y of the pixels. By modifying Expression (4) with this in mind, K in the following Expression (5) can be obtained.

$$K = C1(\lambda 1) \times SP(\lambda 1)/C1(\lambda 2) \times SP(\lambda 2) = Q3(x, y) \times T(x, y, \lambda 2)/T(x, y, \lambda 1) \ldots$$

Expression (5)

Then, K is obtained by calculating $Q3(x, y) \times T(x, y, \lambda 2)/T(x, y, \lambda 1)$.

Further, by making the area of the reference object U as small as possible in a case where the reference object U is imaged, it is possible to suppress the influence of the illuminance distribution of the illumination L on the image signal values Q1 and Q2. Further, in the correction, it is not always necessary to use the spectral reflectance T(x, y) of each part of the reference object U, and it is practically sufficient to use the average reflectance in practice.

By putting the obtained value K into Expression (3) as a correction value, the following Expression (6) is obtained, and Expression (6) is further transformed into Expression (7).

$$G3(x, y) = R(x, y, \lambda 1)/R(x, y, \lambda 2) \times K \ldots \text{Expression (6)}$$

$$G4(x, y) = R(x, y, \lambda 1)/R(x, y, \lambda 2) = G3(x, y)/K \ldots \text{Expression (7)}$$

G4(x, y) in Expression (7) is a ratio after the correction, and as is clear from Expression (7), the influence of the illuminance distribution S(x, y) of the illumination L and the influence of the spectral distribution SP($\lambda$) of the illumination L are canceled.

By the procedure up to the above, as compared with the correction method in the related art such as shading correction, the influence of illuminance distribution can be canceled more easily, and the influence of the spectral distribution of the illumination L can be canceled more easily.

The ratio G4(x, y) after the correction indicates a correlation with respect to the pressure value as shown in Figs. 16A to 20B, and both have a one-to-one mapping relationship. Based on this relationship, the pressure value can be estimated from the ratio G4(x, y) after the correction, and strictly speaking, the ratio can be converted into the pressure value.

By the way, the height of the correlation between the ratio after the correction and the pressure value is reflected in the validity of the estimation result of the pressure value, and the higher the correlation, the more appropriate estimation result can be obtained. On the other hand, the height of the correlation depends on the respective wavelength ranges of the first sensitivity and the second sensitivity. Therefore, in the present embodiment, each of the first sensitivity and the second sensitivity is set such that a good correlation between the ratio (strictly, the ratio after correction) and the pressure value is established, more specifically, the pressure value monotonically increases or monotonically decreases with respect to the ratio.

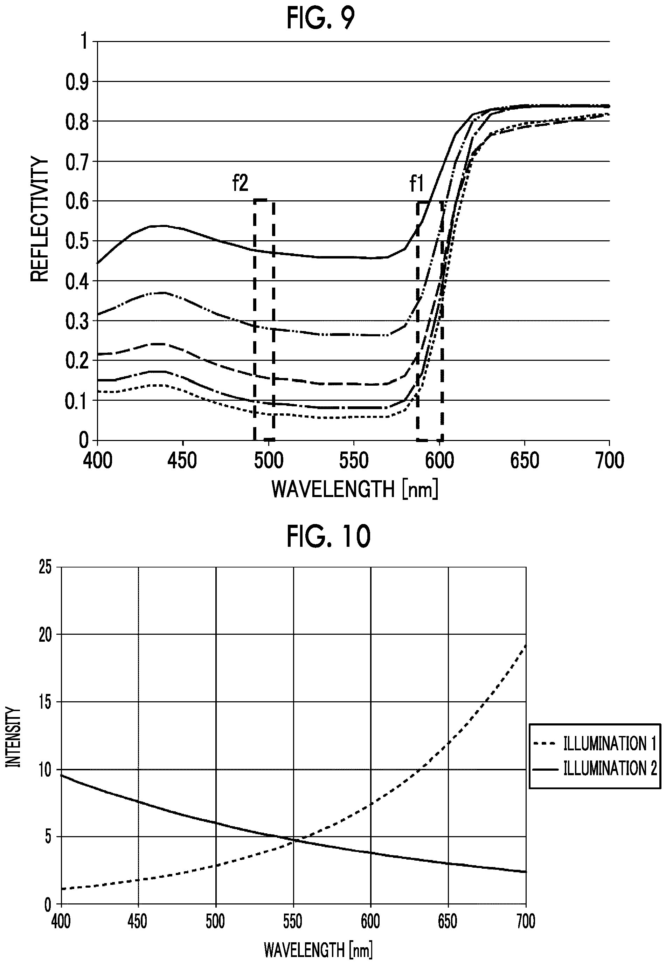

The method of setting each of the first sensitivity and the second sensitivity is not particularly limited, for example, based on the relationship between the pressure value and the spectral reflectance shown in Figs. 8 and 9, each of the first sensitivity and the second sensitivity can be set to suitable wavelength ranges. Specifically, in Figs. 8 and 9, it is preferable to set the first sensitivity to a wavelength range (for example, in the figure, a range surrounded by the broken line frame with the symbol f1) in which the spectral reflectance changes greatly with respect to the change in the pressure value. Further, in Figs. 8 and 9, it is preferable to set the second sensitivity to a wavelength range (for example, in the figure, a range surrounded by a broken line frame with symbol f2) in which the spectral reflectance changes with respect to the change in the pressure value, and the amount of change is smaller than the wavelength range of the first sensitivity.

Further, each of the half-widths of the first sensitivity and the second sensitivity affects the accuracy of the estimation result of the pressure value. Hereinafter, verification, which is performed by using two illuminations (hereinafter, illumination 1 and illumination 2) will be described with respect to the influence of the half-width on the estimation accuracy of the pressure value.

As shown in Fig. 10, the spectral distributions of each of the illumination 1 and the illumination 2 are different from each other. Further, the center wavelengths of each of the first sensitivity and the second sensitivity are set by using the above-described method. Then, half- widths of each of the first sensitivity and the second sensitivity are changed in a range of 10 nm to 50 nm for each 10 nm, and cases 1 to 5 are set. In each case, the plurality of the above-described samples are imaged under each of the above two illuminations with the respective spectral sensitivities, and the correspondence relationship between the above-described ratio (strictly speaking, the ratio after the correction) and the pressure value is specified.

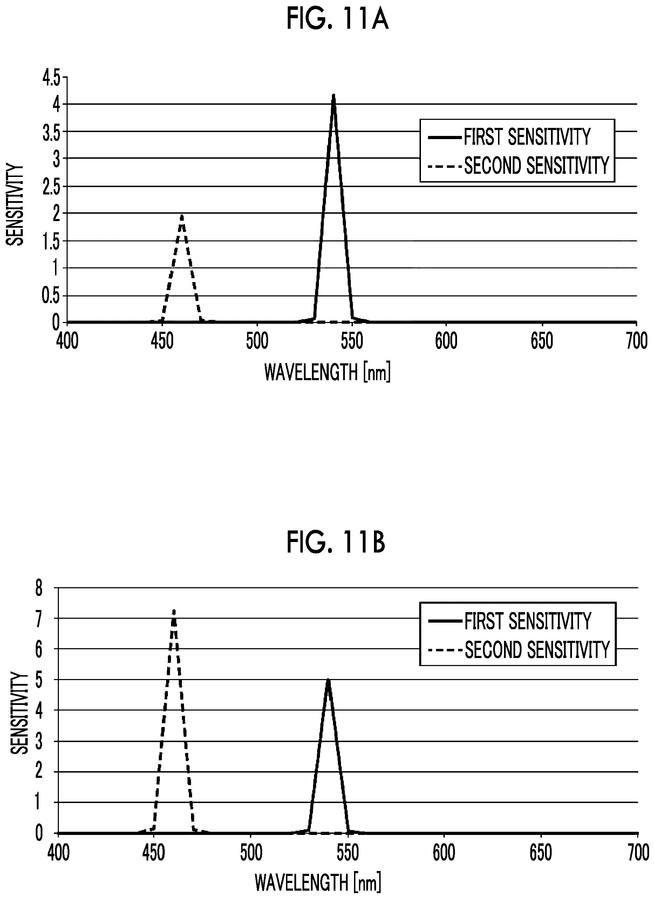

Further, in each case, the magnitude of each of the first sensitivity and the second sensitivity is adjusted such that the image signal values obtained in a case where the reference object U is imaged under each of the two illuminations are substantially equal between the first sensitivity and the second sensitivity. Figs. 11A and 11B show the first sensitivity and second sensitivity after the adjustment in Case 1 in which the half-width is set to 10 nm. Note that Fig. 11A shows the spectral sensitivity in a case where imaging is performed under the illumination 1, and Fig. 11B shows the spectral sensitivity in a case where imaging is performed under the illumination 2.

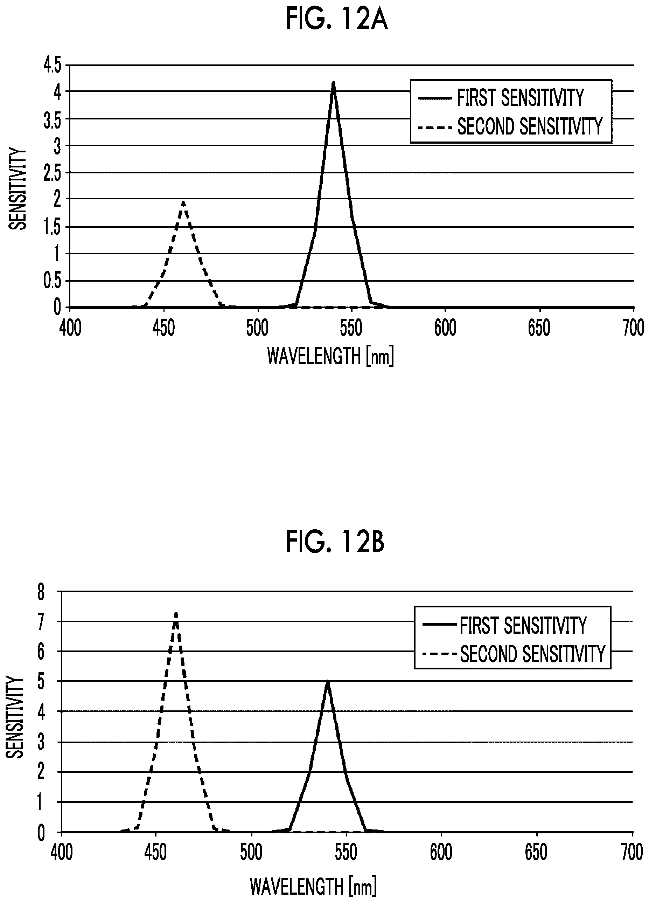

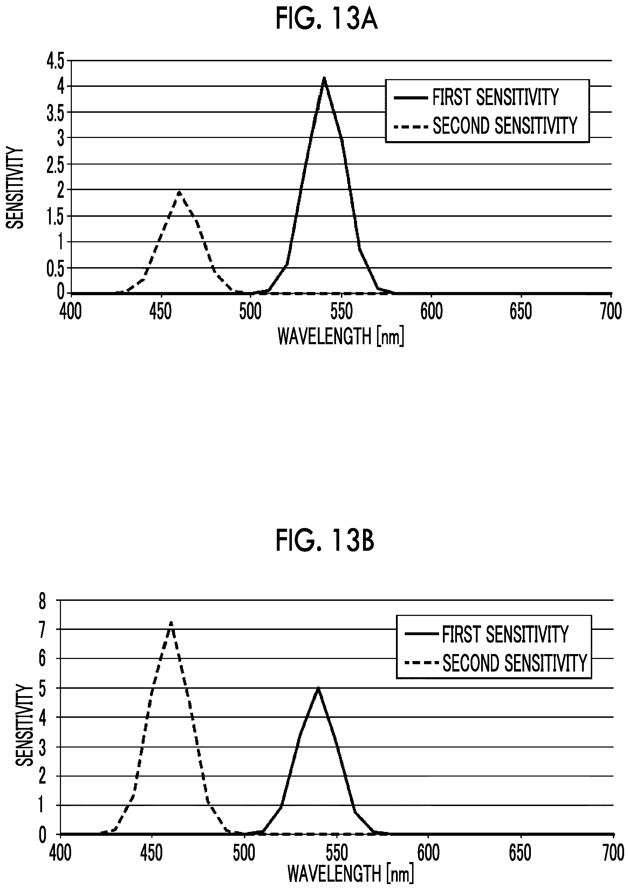

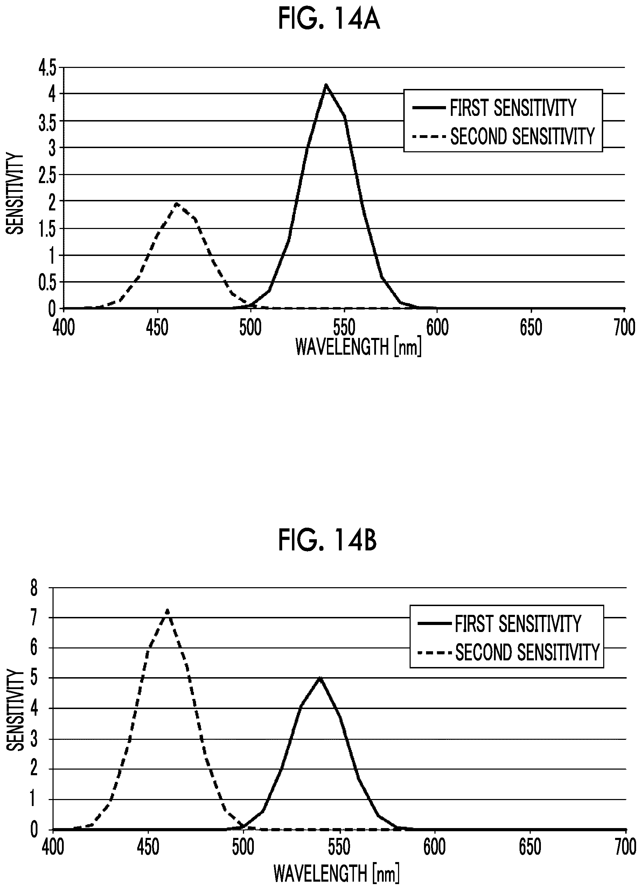

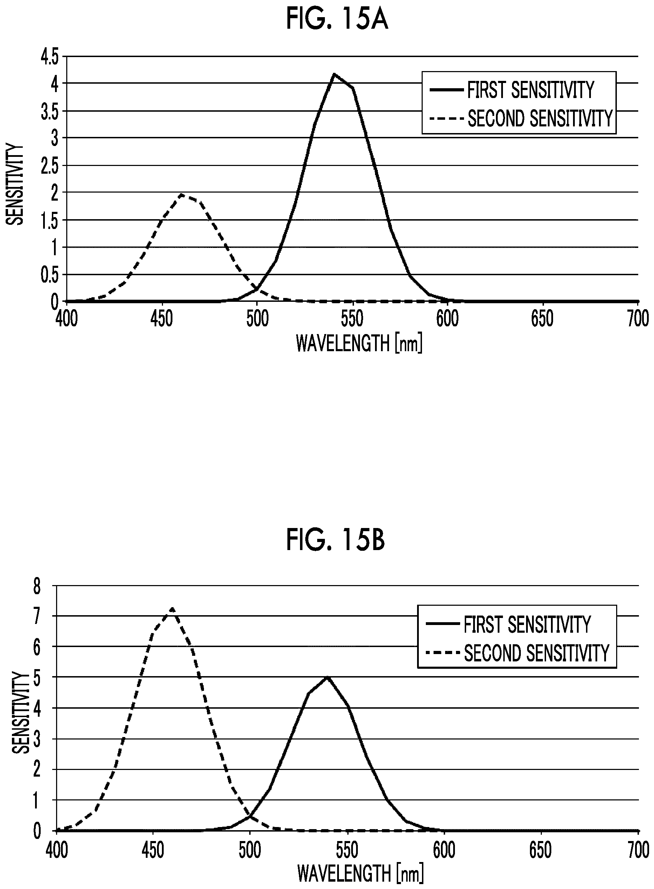

Similarly, Figs. 12A and 12B show the first sensitivity and second sensitivity after the adjustment in Case 2 in which the half-width is set to 20 nm. Figs. 13A and 13B show the first sensitivity and second sensitivity after the adjustment in Case 3 in which the half-width is set to 30 nm. Figs. 14A and 14B show the first sensitivity and second sensitivity after the adjustment in Case 4 in which the half-width is set to 40 nm. Figs. 15A and 15B show the first sensitivity and second sensitivity after the adjustment in Case 5 in which the half-width is set to 50 nm.

The correspondence relationship between the ratio and the pressure value specified in Case 1 is shown in Figs. 16A and 16B. Fig. 16A shows the correspondence relationship derived from the data in Fig. 8 (that is, the relationship between the pressure value and the spectral reflectance), and Fig. 16B shows the correspondence relationship derived from the data in Fig. 9. In a case where the half-width is 10 nm, the correlation between the ratio and the pressure value becomes high, and the pressure value clearly monotonically increases as the ratio increases even in a case where the spectral distribution of illumination has a large relative intensity on the long wavelength side like illumination 1 and even in a case where the relative intensity increases on the short wavelength side like illumination 2. Therefore, based on the correspondence relationship specified in Case 1, the influence of the spectral distribution of the illumination can be eliminated, and the pressure value can be estimated accurately.

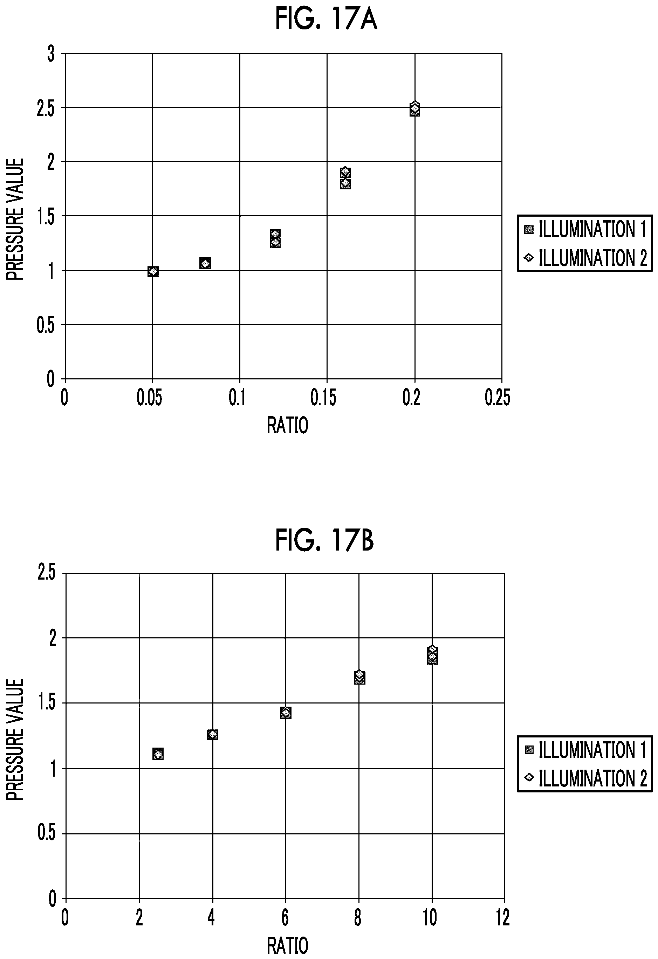

Regarding Case 2, Fig. 17A shows a correspondence relationship derived from the data in Fig. 8, and Fig. 17B shows a correspondence relationship derived from the data in Fig. 9. In the Case 2, as in the Case 1, the correlation between the ratio and the pressure value becomes high, and the pressure value clearly monotonically increases with the increase in the ratio. Therefore, based on the correspondence relationship specified in Case 2, the influence of the spectral distribution of the illumination can be eliminated, and the pressure value can be estimated accurately.

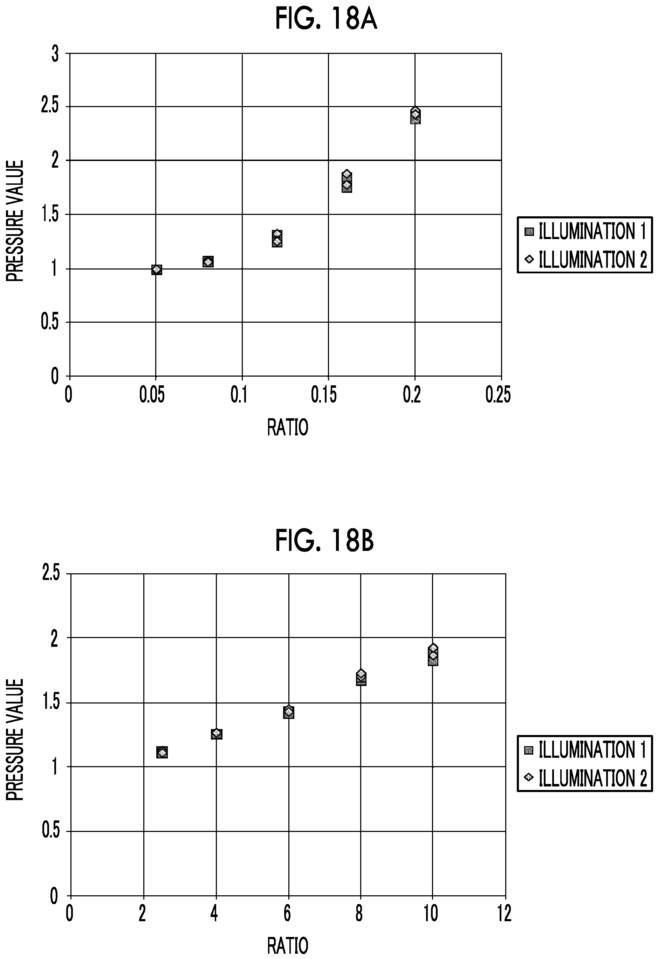

Regarding Case 3, Fig. 18A shows a correspondence relationship derived from the data in Fig. 8, and Fig. 18B shows a correspondence relationship derived from the data in Fig. 9. In Case 3, unlike Cases 1 and 2, the influence of the spectral distribution of illumination cannot be completely canceled by the correction.

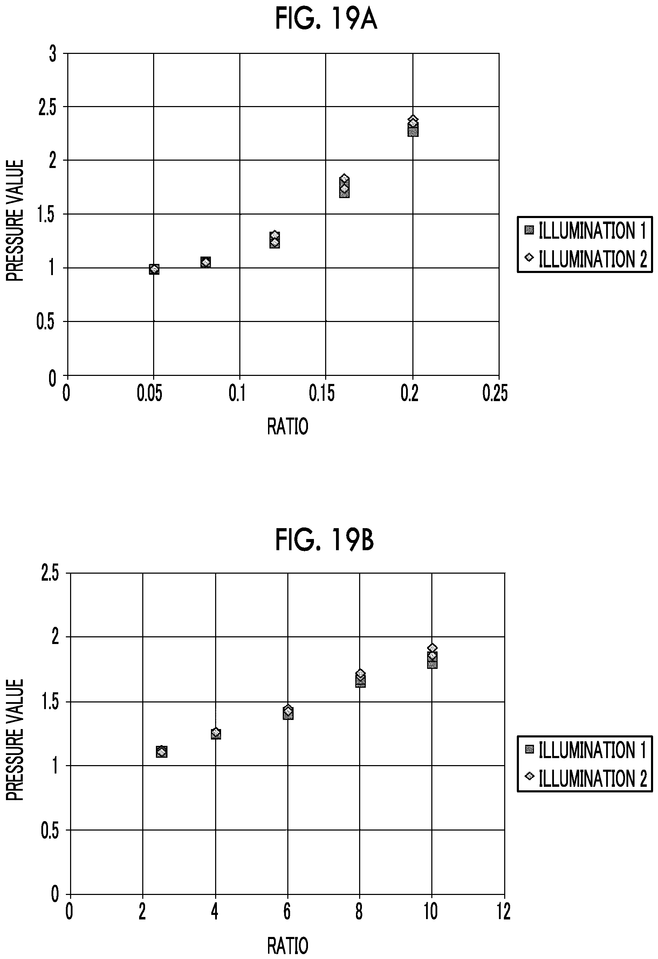

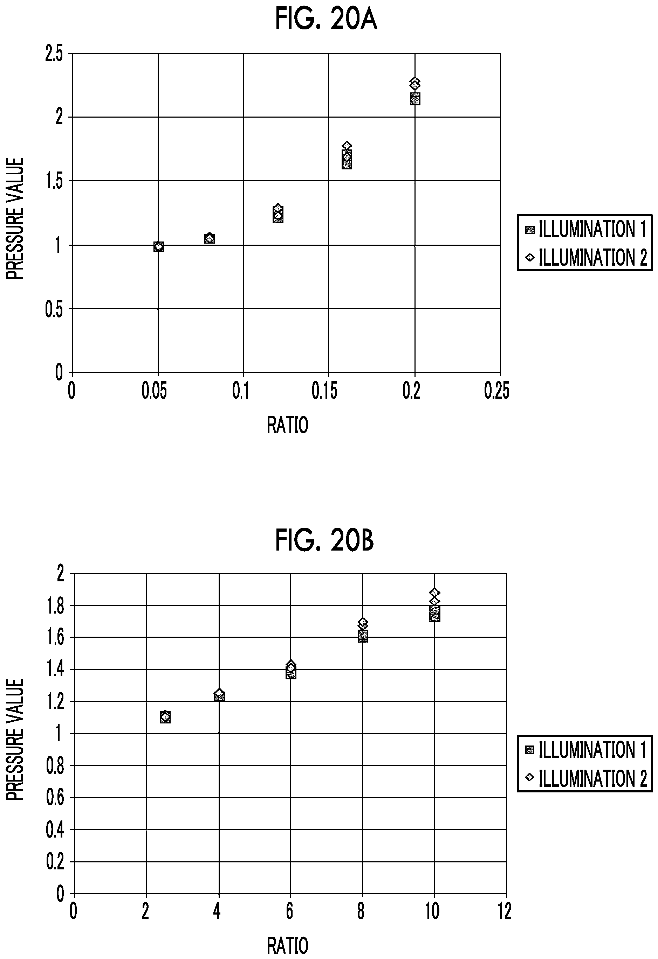

Regarding Case 4, Fig. 19A shows a correspondence relationship derived from the data in Fig. 8, and Fig. 19B shows a correspondence relationship derived from the data in Fig. 9. Regarding Case 5, Fig. 20A shows a correspondence relationship derived from the data in Fig. 8, and Fig. 20B shows a correspondence relationship derived from the data in Fig. 9. As the half-width exceeds 30 nm and becomes larger, the tendency that the influence of the spectral distribution of the illumination cannot be completely canceled by the correction gradually increases.

In view of the above points, the half-width of at least one of the first sensitivity or the second sensitivity is preferably 30 nm or less, and more preferably 10 nm or less. More preferably, it is preferable that the half-width of each of the first sensitivity and the second sensitivity is 10 nm or less.

Under the illumination L, where the spectral distribution does not change in a spike shape like illumination 1 and illumination 2, the influence of the spectral distribution of the illumination can be canceled by correction in a case where the half-width is 30 nm or less, but there may be a case where the spectral distribution of actual illumination changes in a spike shape, in that case, a smaller half-width is preferred.

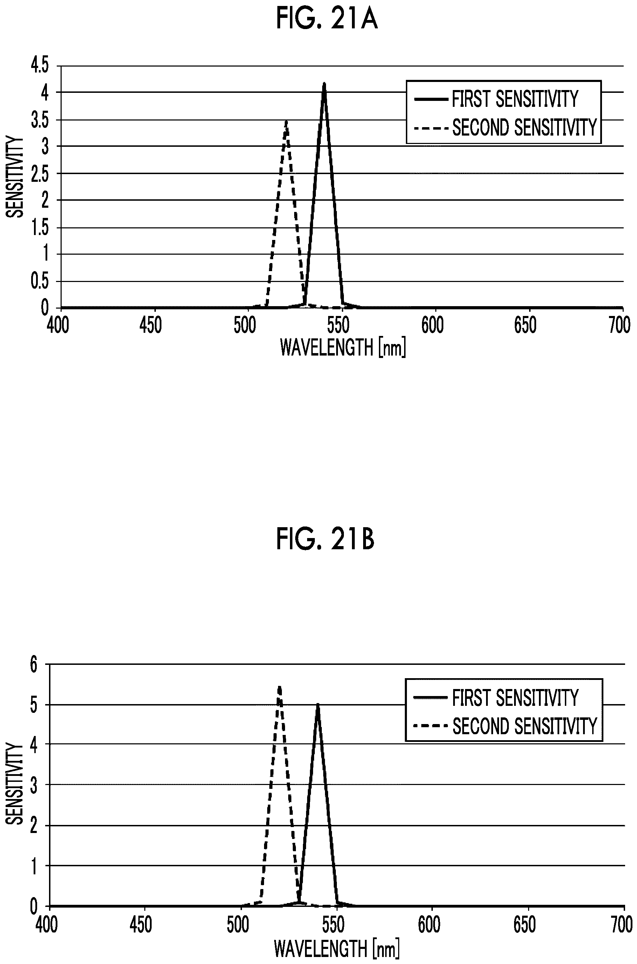

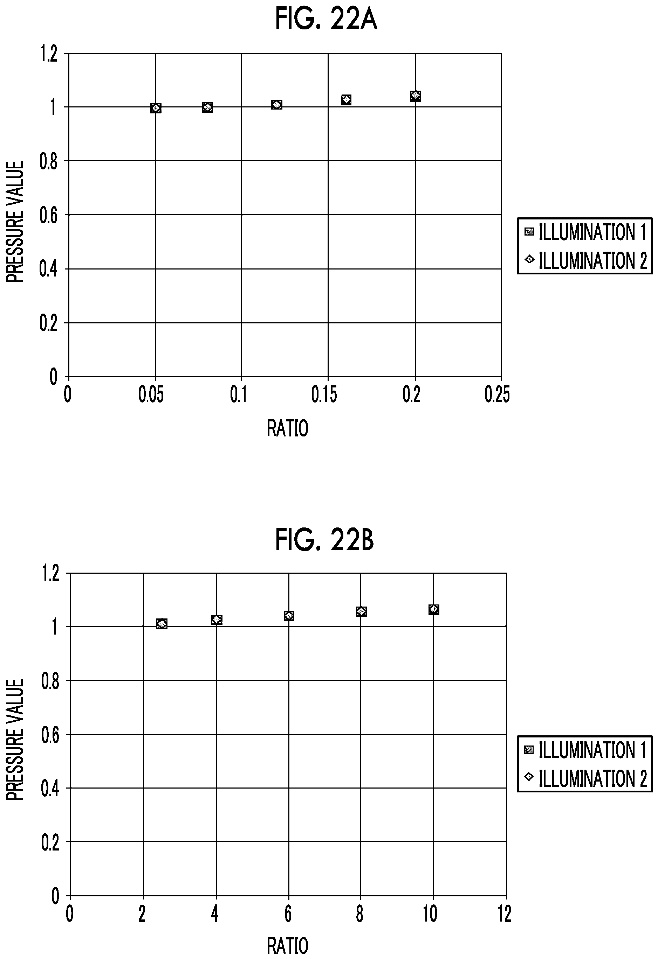

On the other hand, Figs. 21A and 21B show the first sensitivity and the second sensitivity (specifically, the first sensitivity and the second sensitivity adjusted under the illumination 1 or illumination 2) in which the half-width is 10 nm and the center wavelength is changed from the center wavelength in the above Cases 1 to 5. Further, the correspondence relationship between the pressure value and the ratio specified under the first sensitivity and the second sensitivity shown in Figs. 21A and 21B is shown in Figs. 22A and 22B. Fig. 22A shows a correspondence relationship derived from the data in Fig. 8, and Fig. 22B shows a correspondence relationship derived from the data in Fig. 9.

As can be seen from Figs. 22A and 22B, even in a case where the half-width is 10 nm, in a case where the center wavelengths of each of the first sensitivity and the second sensitivity are not appropriately set, the correlation between the ratio and the pressure value, strictly speaking, the amount of change in the pressure value with respect to the change in the ratio becomes low. Therefore, it is preferable that the center wavelengths of each of the first sensitivity and the second sensitivity are set such that the amount of change in the pressure value with respect to the change in the ratio is as large as possible.

[Regarding Image Analysis Flow of Present Embodiment]

Hereinafter, an image analysis flow performed using the image analysis device 10 will be described with reference to Fig. 23. The image analysis flow shown in Fig. 23 is performed by using the image analysis method of the embodiment of the present invention, in other words, each step in the image analysis flow corresponds to each step configuring the image analysis method of the embodiment of the present invention.

In the image analysis flow, first, a first acquisition step S001 is performed. In the first acquisition step S001, the imaging device 12 acquires first image data obtained by imaging the object S with the first sensitivity. Specifically, the object S is imaged by the imaging device 12 including the color sensor 112 in a state in which the first filter 113 having the spectral sensitivity set to the first sensitivity is attached, and more specifically, in a state in which the first filter 113 is disposed between the color sensor 112 and the lens 111 in the imaging device 12. As a result, the first image data is acquired.

Next, a second acquisition step S002 is performed. In the second acquisition step S002, the imaging device 12 acquires second image data obtained by imaging the object S with the second sensitivity. Specifically, the object S is imaged by the imaging device 12 in a state in which the second filter 114 having the spectral sensitivity set to the second sensitivity is attached, and more specifically, in a state in which the second filter 114 is disposed between the color sensor 112 and the lens 111 in the imaging device 12. As a result, the second image data is acquired.

In the present embodiment, in a case where the object S is imaged with each of the first sensitivity and the second sensitivity, the object S is irradiated with the light from the illumination L. Although the wavelength of the light emitted from the illumination L is not particularly limited, the wavelength is set to, for example, 380 nm to 700 nm. Further, the type of the illumination L is also not particularly limited and may be a desk light, a stand light, or indoor illumination consisting of a fluorescent lamp, a light emitting diode (LED), or the like, or may be sunlight.

In Fig. 23, although the second acquisition step S002 is to be performed after the first acquisition step S001, the first acquisition step S001 may be performed after the second acquisition step S002 is performed.

Further, although not particularly shown in Fig. 23, a well-known geometric correction such as tilt correction may be appropriately performed on the acquired first image data and second image data considering that the inclination of the imaging device 12 with respect to the object S changes in a case where the object S is imaged with each of the first sensitivity and the second sensitivity.

After the acquisition of the first image data and the second image data, a removal processing step S003 is performed. In the removal processing step S003, the above-described removal process is performed with respect to each of the image signal values, which are indicated by the acquired first image data and second image data, specifically, the image signal values, which are obtained in accordance with output signals from sensors corresponding to each of the first sensitivity and the second sensitivity in the color sensor 112. As a result, the image signal value, from which the influence of interference (that is, crosstalk) between each of the first filter 113 and the second filter 114 and the color sensor 112 is removed, is acquired.

Next, a calculation step S004 is performed, and in the calculation step S004, a ratio of the image signal value indicated by the first image data with respect to the image signal value indicated by the second image data is calculated, and specifically, a ratio is calculated by using the image signal values after the removal process is performed. In the calculation step S004 of the present embodiment, the above ratio is calculated for each pixel for each of the plurality of pixels configuring the captured image of the object S.

Next, a correction step S005 is performed, and in the correction step S005, a correction for canceling the influence of the spectral distribution of the illumination L is performed on the ratio calculated in the calculation step S004 for each pixel. In performing the correction, first, the reference object U is imaged with each of the first sensitivity and the second sensitivity, and the first reference data and the second reference data are acquired.

As described above, in the present embodiment, the object S and the reference object U are integrated, and specifically, a white pattern, which is the reference object U, is formed at a corner portion of the sheet body forming the object S. Therefore, in the present embodiment, in the first acquisition step S001, by imaging the object S and the reference object U at the same time with the first sensitivity, the first image data and the first reference data can be acquired. Similarly, in the second acquisition step S002, by imaging the object S and the reference object U at the same time with the second sensitivity, the second image data and the second reference data can be acquired.

As described above, in the present embodiment, a part of a correction step in the first acquisition step S001, specifically, a step of acquiring the first reference data is performed, and a part of a correction step in the second acquisition step S002, specifically, a step of acquiring the second reference data is performed. However, the embodiment of the present invention is not limited to this. The object S and the reference object U may be acquired at different timings, and the first reference data and the second reference data may be acquired at timings different from the timing of acquiring the first image data and the second image data.

In a case where the object S and the reference object U are imaged at the same time, the image data of the object S and the image data of the reference object U (reference data) may be extracted from the image data by using a well-known extraction method such as an edge detection method.

Further, in the correction step S005, the above-described correction value K is calculated based on the image signal value indicated by the first reference data and the image signal value indicated by the second reference data. Thereafter, the calculation result of the ratio (specifically, the ratio for each pixel) in the calculation step S004 is corrected by using the correction value K according to the above-described Expression (7). As a result, a corrected ratio, that is, a ratio in which the influence of the spectral distribution of the illumination L is canceled is obtained for each pixel.

Thereafter, an estimation step S006 is performed. In the estimation step S006, the pressure value of the pressure applied to the object S is estimated based on the correspondence relationship between the pressure value and the ratio and the calculation result of the ratio (strictly speaking, the ratio corrected in the correction step S005) in the calculation step S004. Further, in the present embodiment, since the ratio (corrected ratio) is obtained for each pixel, in the estimation step S006, the pressure value is estimated for each pixel based on the ratio for each pixel. As a result, the distribution (plane distribution) of the pressure values on the surface of the object S can be estimated.

The image analysis flow of the present embodiment is ended immediately before a timing of moment when the series of steps described above is ended. According to the image analysis flow of the present embodiment, by using the color of the color-developed object S (strictly speaking, color optical density), the distributions of the pressure value of the pressure applied to the object S, specifically, the pressure value on the surface of the object S can be estimated accurately and easily. In particular, in the present embodiment, it is possible to more easily eliminate (cancel) the influence of the illuminance distribution of the illumination L and the influence of the spectral distribution of the illumination L.

[Other Embodiments]

The embodiment described so far is a specific example of easy-to-understand explanations of an image analysis method, an image analysis device, a program, and a recording medium of the embodiment of the present invention. This is merely an example, and other embodiments are possible.

In the above embodiment, in the case of acquiring the first image data and the second image data by imaging the object S with each of the first sensitivity and the second sensitivity, the object S is imaged using one of the first filter 113 or the second filter 114, and then the object S is imaged by switching to the other filter. However, the embodiment of the present invention is not limited to this, and for example, the imaging device 12 having a plurality of color sensors 112, such as the so-called multi-lens camera, may be used to image the object S with both the first sensitivity and the second sensitivity at the same time.

Further, in the above embodiment, although the correction for canceling the influence of the spectral distribution of the illumination L is performed, the correction may not necessarily have to be performed. For example, in a case where the illumination L having a spectral distribution in which the intensity at each wavelength is uniform is used, since there is no influence of the spectral distribution, the correction may be omitted in that case.

Further, in a case where the object S is imaged and the image data is acquired by using the imaging device 12 in the above embodiment, the entire object S may be imaged in one imaging. Alternatively, the image data of an image showing the entire object S may be acquired (created) by imaging each portion of the object S at a plurality of times of imaging and combining the image data obtained in each imaging. This method of imaging the object S a plurality of times for each portion is effective in a case where the first filter 113 and the second filter 114 are composed of interference type filters and the spectral transmittance of the object S can change according to an incidence angle of light. In a case where the object S is imaged for each portion, each imaging is preferably performed in a state in which the central position of the imaging portion is brought close to the center of the imaging angle of view and the optical path to the color sensor 112 is perpendicular to the surface of the imaging portion.

Explanation of References

10: image analysis device
11: processor
12: imaging device
13: memory
14: storage
15: input device
16: communication interface
17: output device
21: image data acquisition unit
22: reference data acquisition unit
23: removal processing unit
24: calculation unit
25: correction unit
26: storage unit

27: estimation unit
111: lens
112: color sensor
113: first filter
114: second filter
L: illumination
S: object
U: reference object

**Claims**

1. An image analysis method comprising:

   a first acquisition step of acquiring first image data obtained by imaging an object, which develops color according to an amount of external energy in a case where the external energy is applied, with a first sensitivity;
   a second acquisition step of acquiring second image data obtained by imaging the object with a second sensitivity different from the first sensitivity;
   a calculation step of calculating a ratio of an image signal value indicated by the first image data with respect to an image signal value indicated by the second image data; and
   an estimation step of estimating the amount of the external energy applied to the object, based on a correspondence relationship between the amount of the external energy and the ratio, and a calculation result of the ratio in the calculation step.

2. The image analysis method according to claim 1, further comprising:

   a correction step of performing correction, with respect to the ratio, for canceling an influence of a spectral distribution of illumination in a case where the object is imaged,
   wherein in the correction step,
   first reference data, which is obtained by imaging a reference object with the first sensitivity, is acquired,
   second reference data, which is obtained by imaging the reference object with the second sensitivity, is acquired,
   a correction value is calculated based on an image signal value indicated by the first reference data and an image signal value indicated by the second reference data, and
   the calculation result of the ratio in the calculation step is corrected by using the correction value, and
   in the estimation step, the amount of the external energy applied to the object is estimated based on the correspondence relationship and the corrected ratio.

3. The image analysis method according to claim 2,
   wherein the reference object is a member of which a spectral reflectance of surface color is known.

4. The image analysis method according to claim 2 or 3,
   wherein the reference object is a member of which surface color has single and uniform color.

5. The image analysis method according to any one of claims 2 to 4,

   wherein the first image data and the first reference data are acquired by imaging the object and the reference object at the same time with the first sensitivity, and
   the second image data and the second reference data are acquired by imaging the object and the reference object at the same time with the second sensitivity.

6. The image analysis method according to any one of claims 1 to 5,
   wherein at least one of a wavelength range, which defines the first sensitivity, or a wavelength range, which defines the second sensitivity, has a half-width of 10 nm or less.

7. The image analysis method according to any one of claims 1 to 6,

   wherein in the first acquisition step, the first image data is acquired by causing an imaging device, which has a color sensor, to image the object in a state in which a first filter, where a spectral sensitivity is set to the first sensitivity, is attached, and
in the second acquisition step, the second image data is acquired by causing the imaging device to image the object in a state in which a second filter, where a spectral sensitivity is set to the second sensitivity, is attached.

8. The image analysis method according to claim 7,

wherein in the first acquisition step, the first image data is acquired by imaging the object in a state in which the first filter is disposed between the color sensor and a lens in the imaging device, and
in the second acquisition step, the second image data is acquired by imaging the object in a state in which the second filter is disposed between the color sensor and the lens in the imaging device.

9. The image analysis method according to claim 7 or 8,

wherein a removal process for removing an influence of interference between each of the first filter and the second filter, and the color sensor is performed for respective image signal values indicated by the first image data and the second image data, and
in the calculation step, the ratio is calculated by using the image signal value after the removal process is performed.

10. The image analysis method according to any one of claims 1 to 9,
wherein each of the first sensitivity and the second sensitivity is set such that the amount of the external energy monotonically increases or monotonically decreases with respect to the ratio.

11. The image analysis method according to any one of claims 1 to 10,

wherein in the calculation step, the ratio is calculated for each of a plurality of pixels constituting a captured image of the object, and
in the estimation step, the amount of the external energy applied to the object is estimated for each of the pixels.

12. An image analysis device comprising:

a processor,
wherein the processor is configured to:

acquire first image data obtained by imaging an object, which develops color according to an amount of external energy in a case where the external energy is applied, with a first sensitivity;
acquire second image data obtained by imaging the object with a second sensitivity different from the first sensitivity;
calculate a ratio of an image signal value indicated by the first image data with respect to an image signal value indicated by the second image data; and
estimate the amount of the external energy applied to the object, based on a correspondence relationship between the amount of the external energy and the ratio, and a calculation result of the ratio.

13. A program causing a computer to execute each step in the image analysis method according to any one of claims 1 to 11.

14. A computer-readable recording medium on which a program for causing a computer to execute each step included in the image analysis method according to any one of claims 1 to 11 is recorded.

# FIG. 1

# FIG. 2

# FIG. 3

EP 4 224 129 A1

# FIG. 4

**IMAGE ANALYSIS DEVICE**

21 — IMAGE DATA ACQUISITION UNIT

22 — REFERENCE DATA ACQUISITION UNIT

23 — REMOVAL PROCESSING UNIT

24 — CALCULATION UNIT

25 — CORRECTION UNIT

26 — STORAGE UNIT

27 — ESTIMATION UNIT

10

## FIG. 5

## FIG. 6

## FIG. 7

$$\begin{pmatrix} Ga1 \\ \\ Ga2 \end{pmatrix} = \begin{pmatrix} a & b \\ \\ c & d \end{pmatrix} \begin{pmatrix} Gb1 \\ \\ Gb2 \end{pmatrix}$$

## FIG. 8

## FIG. 9

## FIG. 10

## FIG. 11A

## FIG. 11B

# FIG. 12A

# FIG. 12B

## FIG. 13A

## FIG. 13B

# FIG. 14A

# FIG. 14B

# FIG. 15A

# FIG. 15B

## FIG. 16A

## FIG. 16B

## FIG. 17A

## FIG. 17B

## FIG. 18A

## FIG. 18B

# FIG. 19A

# FIG. 19B

# FIG. 20A

# FIG. 20B

## FIG. 21A

## FIG. 21B

## FIG. 22A

## FIG. 22B

# FIG. 23

```
        IMAGE ANALYSIS FLOW
              START
                │
                ▼
      FIRST ACQUISITION STEP  ────  S001
                │
                ▼
      SECOND ACQUISITION STEP ────  S002
                │
                ▼
      REMOVAL PROCESSING STEP ────  S003
                │
                ▼
        CALCULATION STEP      ────  S004
                │
                ▼
        CORRECTION STEP       ────  S005
                │
                ▼
        ESTIMATION STEP       ────  S006
                │
                ▼
        IMAGE ANALYSIS FLOW
              END
```

## INTERNATIONAL SEARCH REPORT

International application No.

**PCT/JP2021/032477**

| A. | CLASSIFICATION OF SUBJECT MATTER |
|---|---|

*G01L 1/24*(2006.01)i; *G01J 1/58*(2006.01)i; *G01L 1/00*(2006.01)i; *G01L 5/00*(2006.01)i
FI:    G01L1/24 Z; G01J1/58; G01L1/00 E; G01L5/00 101A

According to International Patent Classification (IPC) or to both national classification and IPC

| B. | FIELDS SEARCHED |
|---|---|

Minimum documentation searched (classification system followed by classification symbols)

G01L1/00; G01L1/24; G01L5/00; G01J1/58

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2008-232665 A (FUJIFILM CORP.) 02 October 2008 (2008-10-02) | 1-14 |
| A | JP 2007-279013 A (RAILWAY TECHNICAL RESEARCH INSTITUTE) 25 October 2007 (2007-10-25) | 1-14 |
| A | JP 2015-215291 A (ISIN INC.) 03 December 2015 (2015-12-03) | 1-14 |
| A | US 2016/0299018 A1 (BOE TECHNOLOGY GROUP CO., LTD.) 13 October 2016 (2016-10-13) | 1-14 |
| A | JP 1-180436 A (FUJI PHOTO FILM CO., LTD.) 18 July 1989 (1989-07-18) | 1-14 |

☐ Further documents are listed in the continuation of Box C.       ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 September 2021** | **05 October 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/032477**

| Patent document cited in search report | | | Publication date (day/month/year) | Patent family member(s) | | | Publication date (day/month/year) |
|---|---|---|---|---|---|---|---|
| JP | 2008-232665 | A | 02 October 2008 | (Family: none) | | | |
| JP | 2007-279013 | A | 25 October 2007 | (Family: none) | | | |
| JP | 2015-215291 | A | 03 December 2015 | (Family: none) | | | |
| US | 2016/0299018 | A1 | 13 October 2016 | CN | 104713669 | A | |
| JP | 1-180436 | A | 18 July 1989 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008232665 A
- JP 5110767 A
- JP H5110767 A
- JP 2020073907 A